# EUROPEAN PATENT SPECIFICATION

(11) **EP 2 490 057 B1**
(45) Date of publication and mention of the grant of the patent: **12.04.2017**
(21) Application number: 11154848.3
(22) Date of filing: 17.02.2011
(51) Int. Cl.: G02B 6/44

(54) **Support of an optical fibre organizer system with an optical coupler**
Träger für ein System zum Organisieren von Glasfasern mit einem optischen Koppler
Support pour organiseurs de fibres optiques avec un coupleur à fibre optique

(43) Date of publication of application: 22.08.2012
(73) Proprietor: CommScope Connectivity Belgium BVBA, 3010 Kessel-Lo (BE)
(72) Inventor: Diepstraten, Patrick, 3550 Heusden-Zolder (BE); Schurmans, Eric, 3450 Hogen-Geetbets (BE); Vastmans, Kristof, 3370 Boutersem (BE); Vanderhaeghen, Steven, 3545 Zelem (BE)
(74) Representative: Patentanwaltskanzlei WILHELM & BECK

(56) References cited:
- EP-A1- 0 370 819
- EP-A2- 0 271 213
- WO-A1-94/23324

## Description

The present invention relates to the management of optical fibre connections and in particular concerns the support of an optical fibre organizer.

WO 2009/106874 A1 describes an optical fibre organizer comprising optical fibre storage trays, a support for supporting the storage trays and at least one cable termination retention means. The trays include various cable and fibre guides, and various guide walls and retaining tabs are provided for guiding incoming/outgoing fibres/cables to and from an organizer assembly. The trays are mounted on the support side-by-side in a one-dimensional array. A cable with an optical fibre is fixed to the support and the fibre is guided to the respective tray. The tray comprises fixing means for fixing optical fibre splices.

WO94/23324 discloses an optical fibre organizer having a plurality of substantially mutually adjacent inlet ports and a plurality of mutually separated outlet ports, and means connecting the inlet ports and the outlet ports such that a fibre inserted into each inlet port will emerge from a predetermined outlet port. The optical fibre organizer comprises a support, mounting means for mounting trays and fixing means for fixing an optical coupler.

EP 0 271 213 A2 discloses a distribution frame for an optical fibre transmission system that comprises a cabinet incorporating at each side at least one side panel supporting a surplus length of a cable, a pair of inner panel spaced from the side panels and organizer trays, arranged to accommodate surplus lengths of fibres from the cables, supported between the inner panels, the panels also supporting couplers for enabling the cable fibres to be connected to further fibres, the ends of which are accommodated in the spaces between the inner and side panels. Thinner panels comprise holes in which the couplers are arranged. Endings of the couplers protrude from the holes of the panels.

EP 0 370 819 A1 discloses a fibre distribution arrangement. The distribution arrangement for optical fibres comprises a branched coupling array and a plurality of splice organizers for storing splices associated with connections to the coupling array. Each fibre connected to the array passes through a manifold block that is provided with a plurality of capillaries extending to the splice organizers. Fibres from other parts of the network also pass through the manifold and into capillaries for conduction to the splice organizers, where they are connected to a respective fibre from the coupling array. There is a support of an optical fibre organizer system with mounting means disclosed for mounting trays for storing an optical fibre and an optical splice, whereby the optical coupler is fixed to the support.

The object of the invention is to provide a support for an optical fibre organizer with improved functions. The object of the invention is achieved by the support of claim 1. Further embodiments of the invention are described in dependent claims.

A basic idea of the proposed support is to provide fixing means for fixing an optical coupler at the support. For this reason, it is not necessary to provide area and space on the tray for fixing the coupler. In most cases, the support is large enough to provide fixing means and an area for fixing the optical coupler on the support. Thus, more free space on the tray is available and can be used for arranging more splices and/or other optical elements.

The support provides a recess for the arrangement of the fixing means whereby the opening provides a space for receiving at least a part of the coupler. Thus, it is possible to arrange the coupler in an area which is protected by parts of the support. Furthermore, the height of the support does not increase by the arrangement of the coupler on the support. A cover, for example a removable cover is arranged for closing the opening. This allows for a secure protection of the coupler.

The fixing means are arranged at an opposite side of the support relative to the mounting means for the tray. As a result, it is possible to arrange the coupler in proximity to the tray without the need to change the mounting means for mounting the trays to the support. Furthermore, the coupler can easily be accessed without the need to remove the trays from the support.

In a further embodiment, the fixing means define a mounting position of the coupler which is along a longitudinal axis of the support, preferably inclined with an angle relative to the longitudinal axis. These features provide an arrangement of the coupler without being required to change the basic construction of the support. The inclined position of the coupler has the advantage that the guiding of the fibres to the tray can be performed in a preferred section of the support although the coupler is arranged in a middle section of the support.

In a further embodiment, an opening is provided for guiding an optical fibre from the area of the fixing means to the side of the support at which the mounting means are arranged. Thus, it is possible to guide the optical fibre from the optical coupler to a preferred area of the tray taking a short route.

In a further embodiment, the cover is arranged at a back side of the support opposite to the mounting means.

In a further embodiment, the fixing means comprise three parts whereby two parts are arranged at opposite end sections of the coupler and a third part is arranged in a middle section of the coupler. The three fixing means allow for secure fixing of the coupler onto the support.

In a further embodiment, guiding means are disposed at areas dedicated to end sections of the coupler for guiding a fibre with a minimum radius to prevent a micro-bending of the fibre. Micro-bending of the fibre may damage the fibre; thus, it is advantageous to prevent a too small bending radius of the fibre.

In a further embodiment, the fixing means are disposed in a middle section along the longitudinal axis of the support. In the middle section, the trays are fixed to the support, as well. For this reason, there is only a small distance between the coupler and the trays.

In a further embodiment, the coupler is embodied as an optical splitter or an optical coupler for coupling optical signals to or from an optical fibre for example a wavelength division multiplexer or a wavelength division demultiplexer.

Various embodiments of the present invention will now be described in more detail by way of example only, with reference to the accompanying drawings in which:
Figure 1 shows an exploded view of a fibre organizer system;
Figure 2 shows a view of a backside of a support and a cover;
Figure 3 shows a detailed schematic view of a first fixing means;
Figure 4 shows the support with a mounted splitter and mounted trays;
Figure 5 shows a support with mounted trays and a closed receiving area for the splitter; and
Figure 6 shows a comparative example of a fibre organizer.

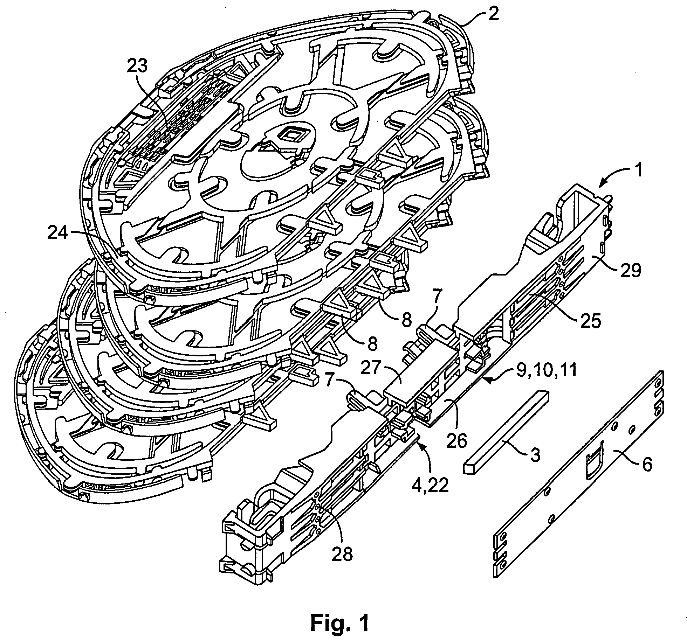

Referring to Figure 1, an optical fibre organizer system is shown which comprises a support 1 and four trays 2 which are mounted onto the support 1. For mounting a tray to the support 1, first and second hinge means 7, 8 are arranged. The first hinge means 7 is arranged on a front side of the support 1. The second hinge means 8 is arranged on a mounting rim of the tray 2. The support 1 comprises a receiving area 4 for an optical splitter 3 at a backside which is opposed to a mounting side for the trays 2. The optical splitter 3 is used for dividing an optical path of one optical fibre into optical paths of different further optical fibres. The support 1 comprises fixing means 9, 10, 11 in the receiving area 4 for fixing the splitter 3 to the support 1. Furthermore, a cover plate 6 is shown which is used to close a recess 22 in which the receiving area 4 and the fixing means 9,10,11 are disposed in the support 1. The cover plate 6 may be fixed by snap arms to the support 1.

Each tray 2 may include various cable and fibre guides and various guide walls and retaining tabs for guiding incoming/outgoing fibres to and from the support 1. Furthermore, the trays 2 comprise splice holders 23 for holding optical splices at the tray 2. The trays 2 are hinged to the support 1 by means of the first and second hinge means 7, 8 to enable the individual trays to be pivoted about their respective hinge axis in order to provide access to the trays 2, if desired. The trays 2 constitute individual optical fibre storage means for storing lengths of fibre, commonly referred to as pig tails, for connecting to other optical fibres or components located on or in the individual trays. Furthermore, each tray comprises various fibre guide elements 24.

The support 1 has a base plate which comprises a moulded structure having a plurality of pairs of first hinge means 7 in the form of integrally moulded protrusions containing apertures for receiving second hinge means 8 in the shape of pins formed on the respective optical fibre storage tray 2.

The support 1 comprises guides 25 constituting upstanding protrusions from a planar part of the base plate of the support 1. The receiving area 4 is arranged between sidewalls 26, 27 of the support 1 and between opposite end sections 28, 29 of the support 1.

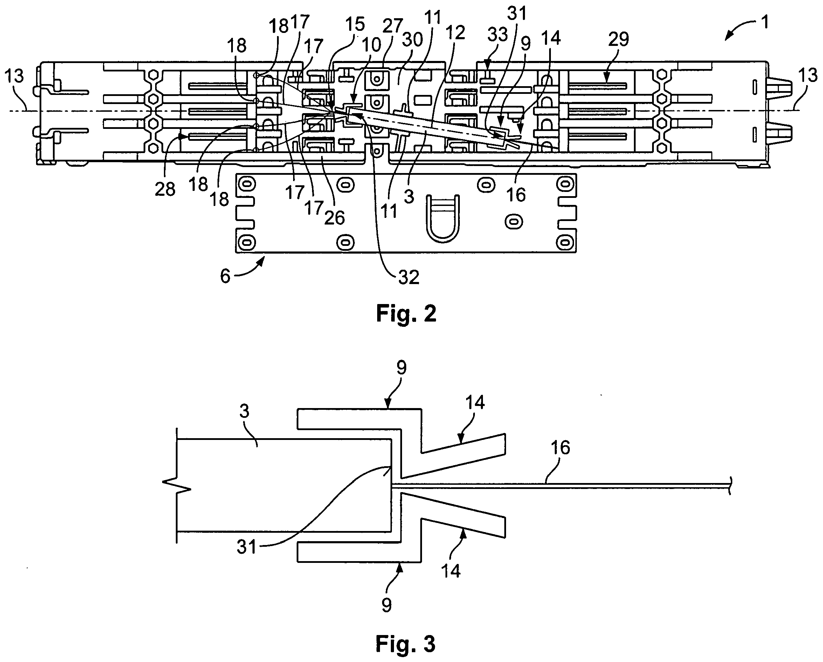

Figure 2 shows a view of a backside of the support 1 with a mounted optical splitter 3. The optical splitter 3 is mounted on a base plate 30 which is arranged in a lower plane than the backside of the support 1. The base plate 30 comprises a first fixing means 9 which is arranged at a first end of the splitter 3. The first fixing means 9 are embodied as two parallel walls protruding from the base plate 30 and arranged at opposite lateral faces of the splitter 3. Each wall has an angled shape encompassing an end of the respective lateral face of the splitter 3 and a part of the first end face 31 of the splitter 3. Furthermore, in the shown embodiment first guiding means 14 are disposed at the first end face 31 of the splitter 3. The first guiding means 14 are embodied as two walls protruding from the base plate 30. The two walls define a receiving area referred to the first end face 31 of the splitter 3 along a longitudinal axis 12 of the splitter 3. The function of the first guiding means 14 is to prevent a micro-bending of a first fibre 16 which is guided to the splitter 3.

As can be seen in Figure 2, the splitter 3 is arranged with its longitudinal axis 12 in an inclined manner to the second longitudinal axis 13 of the support 1. An angle between the longitudinal axis 12 and the second longitudinal axis 13 may be in the range of 0° and 80°, preferably between 5° and 50°.

In a middle section along the first longitudinal access 12 of the splitter 3, third fixing means 11 are arranged on the base plate 30. The third fixing means 11 are embodied as two parallel walls which fix two opposite lateral faces of the splitter 3.

At a second end face 32 of the optical splitter 3, a second fixing means 10 is arranged. The second fixing means 10 is embodied with the same design as the first fixing means 9. The second fixing means encompasses the two opposite lateral faces of the splitter 3 at the second end face 32 and also partially the second end face 32. Furthermore, second guiding means 15 are disposed at the second end of the optical splitter 3. The second guiding means 15 have the same structure as the first guiding means 14 and are dedicated to provide a micro-bending of further fibres 17 which are guided to the optical splitter 3. In the shown embodiment, there are four further fibres 17 which project from the second end of the optical splitter 3 and are guided to respective openings 18 in the base plate 30. The openings 18 are guided through the base plate 30 to the opposite side of the support 1 at which the trays 2 are mounted to the support 1. The receiving area 4 is surrounded by the two opposite sidewalls 26, 27 and the two opposite end sections 28, 29 defining an opening face 33. The opening face 33 can be closed by the cover plate 6.

The shape of the first, second and third fixing means 9, 10, 11 allow for a simple mounting of the splitter 3. The splitter 3 can simply be pushed between the parallel walls of the first, second and third fixing means. The parallel walls hold the splitter 3. Figure 3 shows a detailed partial view of the first fixing means.

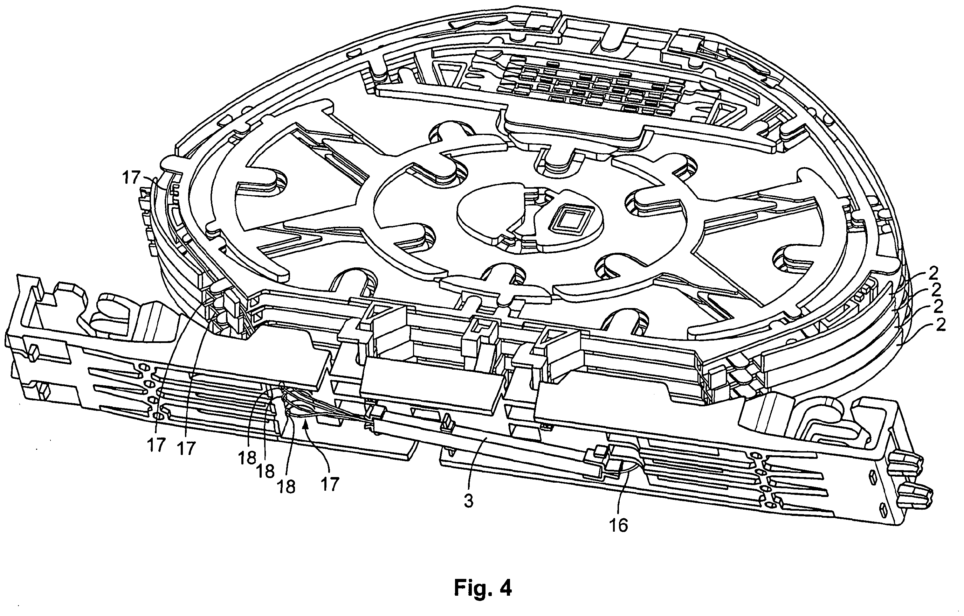

Figure 4 shows the support 1 with mounted trays 2 and with a mounted optical splitter 3. The further fibres 17 are guided from the splitters 3 to the front side of the support 1 and to the trays 2 via the openings 18. In the shown embodiment, a further fibre 17 is depicted which is guided to the upper tray 2.

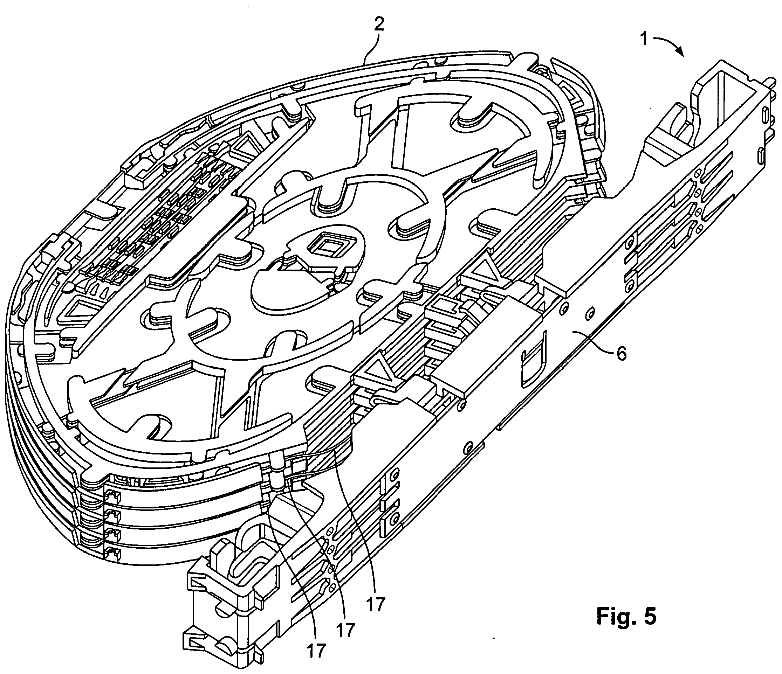

Figure 5 shows the optical fibre organizer system with a mounted optical splitter which cannot be seen due to the receiving area 4 being closed by the cover 6. The cover 6 is removeably connected, e.g. by screws or clips, to the support 1.

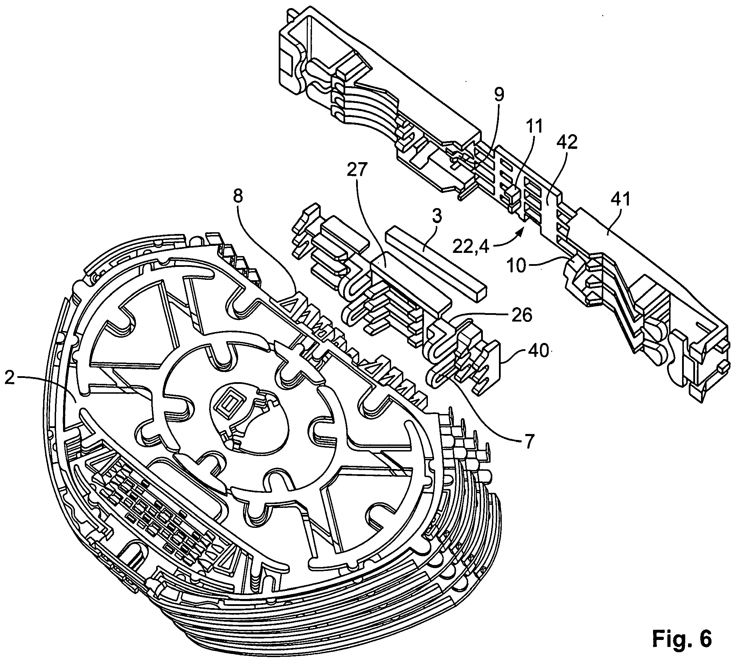

Figure 6 shows an exploded view of a comparative example of an optical fibre organizer system which comprises a further support 41 and four trays 2 which are mounted on a front side of the further support 41. For mounting a tray 2 to the further support 41, first and second hinge means 7, 8 are disposed. The first and second hinge means are embodied in the same design as explained in figure 1. The further support comprises at a front side a mounting structure 40 as a cover which is for example by snap arms removable fixed to the support 1. The first hinge means 7 is arranged on a front side of the mounting structure 40. The second hinge means 8 is arranged on a mounting rim of the tray 2. The further support 1 comprises a receiving area 4 for an optical splitter 3 at a front side which is dedicated to a mounting side for the trays 2.

The further support 41 comprises fixing means 9, 10, 11 in the receiving area 4 for fixing the splitter 3 to the further support 1. In the shown embodiment, the fixing means are arranged on a back plate 42 of the further support 41. The fixing means 9,10,11 have the same shape and the same arrangement as in the embodiment of figure 1. The receiving area 4 is covered by the mounting structure 40 which constitutes a cover and which closes a recess 22 in which the receiving area 4 and the fixing means 9,10,11 are disposed in the further support 41. The shown mounting structure 40 comprises a first and a second side wall 26,27. Depending on the used embodiment, the mounting structure 40 may be embodied as a simple or structured plate with first hinge means 7.

The described examples were explained for an optical splitter. However the invention is not limited to optical splitter, but can applied for any other kind of optical coupler for sending and/or for receiving optical signals to or from a fibre. For example a wavelength division multiplexer and/or a wavelength division demultiplexer may be used as an optical coupler.

## Claims

1. Support (1) of an optical fibre organizer system with mounting means (7) including a hinge for hingeably mounting a plurality of trays (2), each tray of the plurality of trays being adapted for storing an optical fibre (17) and/or an optical splice, whereby the support (1) has fixing means (9, 10, 11) for fixing an optical coupler (3), whereby a recess (22) is arranged in the support (1) in which the fixing means (9, 10, 11) are disposed, whereby the recess (22) provides space for receiving at least a part of the coupler (3), whereby a cover (6) is arranged for covering the recess (22), and whereby the fixing means (9, 10, 11) are arranged at a back side of the support (1) opposite to the mounting means (7).

2. Support according to claim 1, whereby the fixing means (9, 10, 11) define a mounting position of the coupler (3) which is along a longitudinal axis (13) of the support (1).

3. Support of claim 2, whereby a longitudinal axis (12) of the coupler (3) being inclined with an angle relative to the longitudinal axis (13) of the support (1).

4. Support according to one of the precedent claims, whereby an opening (18) is provided for guiding an optical fibre (17) from the area of the fixing means (9, 10, 11) to a side of the support (1) at which the mounting means (7) are arranged.

5. Support of one of the claims 1 to 4, whereby the cover (6 ) is removable fixed to the support (1 ).

6. Support of one of the claims 1 to 5, whereby the cover is arranged at a back side of the support opposite to the mounting means (7).

7. Support of one of the precedent claims, whereby the fixing means comprise two parts (9, 10) which are disposed at opposite end sections of the coupler (3), whereby preferably between the two parts a third part (11) is arranged for fixing the coupler (3) in a middle section.

8. Support according to one of the preceding claims, whereby guiding means (14, 15) are disposed at areas dedicated to end sections of the coupler (3) for guiding a fibre (16, 17) with a minimum radius to prevent a micro bending of the fibre (16, 17).

9. Support according to one of the precedent claims, whereby the fixing means (9, 10, 11) are disposed in a middle section along a longitudinal axis (13) of the support.

10. Support of any one of the precedent claims, whereby the optical coupler is embodied as an optical splitter or a wavelength division multiplexer or a wavelength division demultiplexer.

## Patentansprüche

1. Träger (1) eines faseroptischen Organisierungssystems mit Befestigungsmitteln (7), die ein Scharnier zur schwenkbaren Befestigung mehrerer Ablagen (2) beinhalten, wobei jede Ablage der mehreren Ablagen zum Aufbewahren einer optischen Faser (17) und/oder einer optischen Spleißung ausgelegt ist, wobei der Träger (1) Fixierungsmittel (9, 10, 11) zum Fixieren eines Optokopplers (3) aufweist, wobei sich in dem Träger (1) eine Aussparung (22) befindet, in der die Fixierungsmittel (9, 10, 11) angeordnet sind, wobei die Aussparung (22) Platz zur Aufnahme mindestens eines Teils des Kopplers (3) bereitstellt, wobei eine Abdeckung (6) zum Abdecken der Aussparung (22) angeordnet ist, und wobei die Fixierungsmittel (9, 10, 11) an einer Rückseite des Trägers (1) gegenüber den Befestigungsmitteln (7) angeordnet sind.

2. Träger nach Anspruch 1, wobei die Fixierungsmittel (9, 10, 11) eine Befestigungsposition des Kopplers (3) definieren, die sich entlang einer Längsachse (13) des Trägers (1) erstreckt.

3. Träger nach Anspruch 2, wobei eine Längsachse (12) des Kopplers (3) in einem Winkel relativ zur Längsachse (13) des Trägers (1) geneigt ist.

4. Träger nach einem der vorhergehenden Ansprüche, wobei eine Öffnung (18) zum Führen einer optischen Faser (17) von dem Bereich der Fixierungsmittel (9, 10, 11) zu einer Seite des Trägers (1), an der die Befestigungsmittel (7) angeordnet sind, bereitgestellt ist.

5. Träger nach einem der Ansprüche 1 bis 4, wobei die Abdeckung (6) abnehmbar an dem Träger (1) fixiert ist.

6. Träger nach einem der Ansprüche 1 bis 5, wobei die Abdeckung an einer Rückseite des Trägers gegenüber den Befestigungsmitteln (7) angeordnet ist.

7. Träger nach einem der vorhergehenden Ansprüche, wobei die Fixierungsmittel zwei Teile (9, 10) umfassen, die sich an gegenüberliegenden Endabschnitten des Kopplers (3) befinden, wobei bevorzugt zwischen den zwei Teilen ein drittes Teil (11) zum Fixieren des Kopplers (3) in einem mittleren Abschnitt angeordnet ist.

8. Träger nach einem der vorhergehenden Ansprüche, wobei Führungsmittel (14, 15) an Endabschnitten des Kopplers (3) zugeordneten Bereichen zum Führen einer Faser (16, 17) mit einem Mindestradius angeordnet sind, um eine Mikrokrümmung der Faser (16, 17) zu verhindern.

9. Träger nach einem der vorhergehenden Ansprüche, wobei die Fixierungsmittel (9, 10, 11) in einem mittleren Abschnitt entlang einer Längsachse (13) des Trägers angeordnet sind.

10. Träger nach einem der vorhergehenden Ansprüche, wobei der Optokoppler als ein optischer Teiler oder ein Wellenlängenmultiplexer oder ein Wellenlängendemultiplexer ausgebildet ist.

## Revendications

1. Support (1) d'un système organiseur de fibres optiques ayant des moyens de montage (7) incluant une charnière pour le montage articulé d'une pluralité de plateaux (2), où chaque plateau de la pluralité de plateaux est adapté pour stocker une fibre optique (17) et/ou une épissure optique, le support (1) ayant des moyens de fixation (9, 10, 11) pour la fixation d'un coupleur optique (3), un évidement (22) dans lequel sont disposés les moyens de fixation (9, 10, 11) étant prévu dans le support (1), lequel évidement (22) offre un espace permettant la réception d'au moins une partie du coupleur (3), un couvercle (6) étant disposé de manière à recouvrir l'évidement (22), et les moyens de fixation (9, 10, 11) étant disposés au niveau d'une face arrière du support (1) à l'opposé des moyens de montage (7).

2. Support selon la revendication 1, dans lequel les moyens de fixation (9, 10, 11) définissent une position de montage du coupleur (3) qui se trouve le long d'un axe longitudinal (13) du support (1).

3. Support selon la revendication 2, dans lequel un axe longitudinal (12) du coupleur (3) est incliné d'un certain angle par rapport à l'axe longitudinal (13) du support (1).

4. Support selon l'une des revendications précédentes, dans lequel une ouverture (18) est prévue pour le guidage d'une fibre optique (17) depuis la zone des moyens de fixation (9, 10, 11) vers un côté du support (1) au niveau duquel sont disposés les moyens de montage (7).

5. Support selon l'une des revendications 1 à 4, dans lequel le couvercle (6) est fixé de manière amovible au support (1).

6. Support selon l'une des revendications 1 à 5, dans lequel le couvercle est disposé au niveau d'une face arrière du support à l'opposé des moyens de montage (7).

7. Support selon l'une des revendications précédentes, dans lequel les moyens de fixation comprennent deux parties (9, 10) qui sont disposées à des sections d'extrémité opposées du coupleur (3), une troisième partie (11) étant de préférence disposée entre les deux parties pour la fixation du coupleur (3) dans une section centrale.

8. Support selon l'une des revendications précédentes, dans lequel des moyens de guidage (14, 15) sont disposés au niveau de zones dédiées aux sections d'extrémité du coupleur (3) pour le guidage d'une fibre (16, 17) avec un rayon minimum pour empêcher une micro-flexion de la fibre (16, 17).

9. Support selon l'une des revendications précédentes, dans lequel les moyens de fixation (9, 10, 11) sont disposés dans la section centrale, le long d'un axe longitudinal (13) du support.

10. Support selon l'une quelconque des revendications précédentes, dans lequel le coupleur optique est mis en oeuvre en tant que diviseur optique ou en tant que multiplexeur à répartition en longueur d'onde ou en tant que démultiplexeur à répartition en longueur d'onde.
